# EUROPÄISCHE PATENTSCHRIFT

(11) **EP 1 319 541 B1**
(45) Veröffentlichungstag und Bekanntmachung des Hinweises auf die Patenterteilung: **02.08.2006**
(21) Anmeldenummer: 02027537.6
(22) Anmeldetag: 09.12.2002
(51) Int. Cl.: B60H 1/00

(54) **Vorrichtung zum Drehverstellen von zwei Steuergliedern**
Rotary adjustment device for two control members
Dispositif de réglage en rotation pour deux organes de commande

(30) Priorität: 14.12.2001 DE 10161437
(43) Veröffentlichungstag der Anmeldung: 18.06.2003
(73) Patentinhaber: Behr GmbH & Co. KG, 70469 Stuttgart (DE)
(72) Erfinder: Voigt, Klaus, Dipl.-Ing, 74321 Bietigheim-Bissingen (DE)
(74) Vertreter: Grauel, Andreas

(56) Entgegenhaltungen:
- DE-A1- 19 643 233
- FR-A- 2 699 457
- PATENT ABSTRACTS OF JAPAN Bd. 008, Nr. 164 (M-313), 28. Juli 1984 (1984-07-28) & JP 59 058256 A (OLYMPUS KOGAKU KOGYO KK), 3. April 1984 (1984-04-03)

## Beschreibung

Die vorliegende Erfindung betrifft eine Vorrichtung zum Drehverstellen von mindestens zwei drehbar gelagerten Steuergliedern, z.B. Klappen, insbesondere zum Schalten und/oder Steuern von Gasströmungen, vorzugsweise in einer Klimatisierungsanlage, z.B. eines Kraftfahrzeugs.

Wenn zwei oder mehr Steuerglieder unabhängig voneinander drehverstellt werden sollen, kann grundsätzlich für jedes Steuerglied ein separater manueller oder motorischer Drehantrieb vorgesehen sein, der mit dem zugehörigen Steuerglied antriebsverbunden ist. Der Aufwand zur Realisierung einer derartigen Vorrichtung ist relativ groß.

Das Dokument DE 19643233, das den nächstliegender Stand der Technik bildet, offenbart eine Vorrichtung, wobei die zwei Steuerglieder mit einem gemeinsamen Drehantrieb angetrieben werden. Auch hier ist der Aufwand zur Realisierung einer derartigen Vorrichtung groß.

Die vorliegende Erfindung beschäftigt sich mit dem Problem, für eine Vorrichtung der eingangs genannten Art eine verbesserte Ausführungsform anzugeben, die insbesondere preiswerter herstellbar ist.

Dieses Problem wird durch den Gegenstand des unabhängigen Anspruchs gelöst. Vorteilhafte Ausgestaltungen sind Gegenstand der abhängigen Ansprüche.

Die Erfindung beruht auf dem allgemeinen Gedanken, zwei Steuerglieder mit einem gemeinsamen Drehantrieb über eine Kopplungseinrichtung anzutreiben, wobei die Kopplungseinrichtung in Abhängigkeit der Drehrichtung des Drehantriebs entweder nur das eine Steuerglied oder nur das andere Steuerglied drehend verstellt. Das heißt, daß die Kopplungseinrichtung so aufgebaut bzw. ausgebildet ist, daß ein eingehendes Antriebsmoment in der einen Drehrichtung im wesentlichen nur auf das erste Steuerglied und in der anderen Drehrichtung nur auf das zweite Steuerglied übertragen wird. Durch diesen Aufbau kommt die erfindungsgemäße Vorrichtung mit nur einem einzigen Drehantrieb für zwei unabhängig voneinander betätigbare Steuerglieder aus. Der Aufwand für die Realisierung einer derartigen Vorrichtung wird dadurch reduziert.

Gemäß einer bevorzugten Ausführungsform kann die Kopplungseinrichtung eine Freigang-Mitnehmer-Anordnung aufweisen, die ein gemeinsames, mit dem Drehantrieb antriebsverbundenes Antriebselement und für jedes Steuerglied ein mit dem jeweiligen Steuerglied antriebsverbundenes Abtriebselement aufweist, wobei die Abtriebselemente so mit dem gemeinsamen Antriebselement zusammenwirken, daß sie in ihrer jeweiligen Mitnahmedrehrichtung drehfest mit dem Antriebselement gekoppelt sind und in ihrer jeweiligen Freigangdrehrichtung relativ zum Antriebselement drehverstellbar sind. Dabei sind die Abtriebselemente bezüglich ihrer Mitnahmedrehrichtung und ihrer Freigangdrehrichtung gegensinnig zueinander angeordnet. Durch diese Merkmalskombination ergibt sich ein besonders kompakter Aufbau für die Kopplungseinrichtung.

Gemäß einer speziellen Ausführungsform kann das Antriebselement (oder das Abtriebselement) eine kreiszylindrische Hülse aufweisen, in der das zugehörige Abtriebselement (oder Antriebselement) konzentrisch angeordnet ist, wobei das Abtriebselement (oder Antriebselement) für das zugeordnete Steuerglied eine Anordnung aus mehreren, von einer Nabe radial nach außen abstehenden und jeweils in die selbe Umfangsrichtung geneigte, flexible Lamellen aufweist, die an der Innenseite der Hülse anliegen. Diese Lamellenanordnung ist relativ zur Hülse drehbar angeordnet, wobei in der einen Drehrichtung (Freigangdrehrichtung) die Lamellen entlang der Innenseite der Hülse abgleiten, während sie sich in der entgegengesetzten Drehrichtung (Mitnahmedrehrichtung) an der Innenseite der Hülse abstützen, daran haften bleiben und so die Hülse mitdrehen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- **Fig. 1**: eine perspektivische Ansicht auf eine erfindungsgemäße Vorrichtung bei einer ersten Ausführungsform,
- **Fig. 2**: eine perspektivische Explosionsdarstellung der Vorrichtung gemäß Fig. 1,
- **Fig. 3**: eine Frontalansicht einer Kopplungseinrichtung der Vorrichtung gemäß Fig. 1,
- **Fig. 4**: eine Ansicht wie in fig. 3, jedoch bei einer anderen Ausführungsform der Vorrichtung,
- **Fig. 5**: eine perspektivische Ansicht auf die Vorrichtung, jedoch bei einer weiteren Ausführungsform, und
- **Fig. 6**: eine perspektivische Explosionsdarstellung der Vorrichtung gemäß Fig. 5.

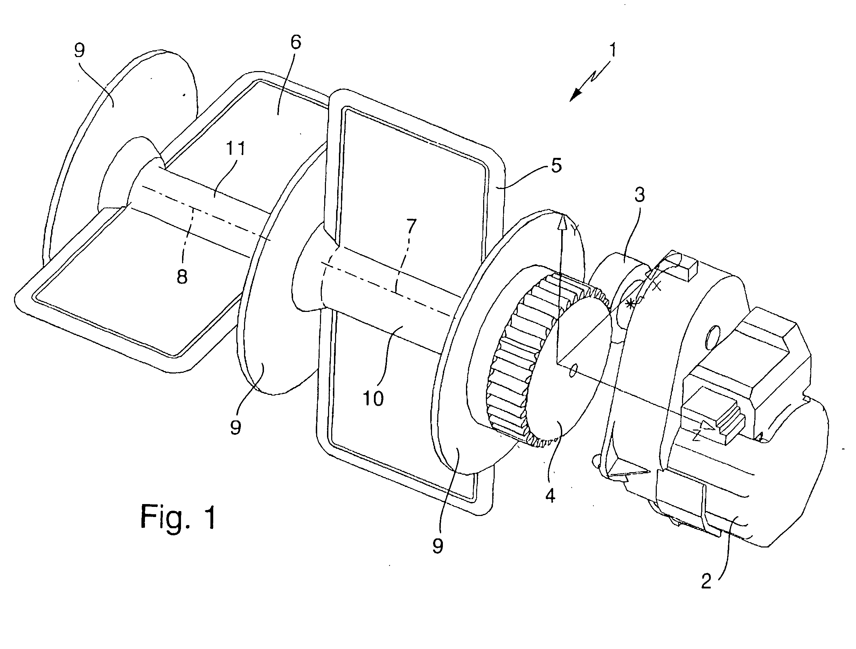

Entsprechend Fig. 1 weist eine Vorrichtung 1 nach der Erfindung einen elektromotorischen Drehantrieb 2 auf, der über ein Antriebsrad 3 mit einer Kopplungseinrichtung 4 antriebsverbunden ist. Die Kopplungseinrichtung 4 ist ausgangsseitig mit zwei Steuergliedern 5 und 6 verbunden, die zum Schalten und/oder Steuern von Gasströmungen dienen. Die Steuerglieder 5 und 6 sind hier in Form von Flügelklappen ausgebildet. Es ist klar, daß die Steuerglieder 5,6 grundsätzlich beliebig ausgebildet sein können, z.B. als Drehschieber. Beide Steuerglieder 5 und 6 sind um Schwenkachsen 7 bzw. 8 drehbar gelagert. Kanalabschnitte, in denen die Steuerglieder 5 und 6 die jeweilige Gasströmung steuern bzw. schalten sind durch scheibenförmige Abschnitte 9 symbolisch dargestellt. Bei der hier gezeigten Ausführungsform sind die beiden Steuerglieder 5 und 6 so angeordnet, daß ihre Schwenkachsen 7 und 8 koaxial zueinander verlaufen. Die Vorrichtung 1 kann beispielsweise in einer Klimatisierungsanlage, insbesondere eines Kraftfahrzeugs, zur Anwendung kommen, um dort Luftströme, z.B. Kaltluft, Heißluft, Umluft, Frischluft, zu steuern.

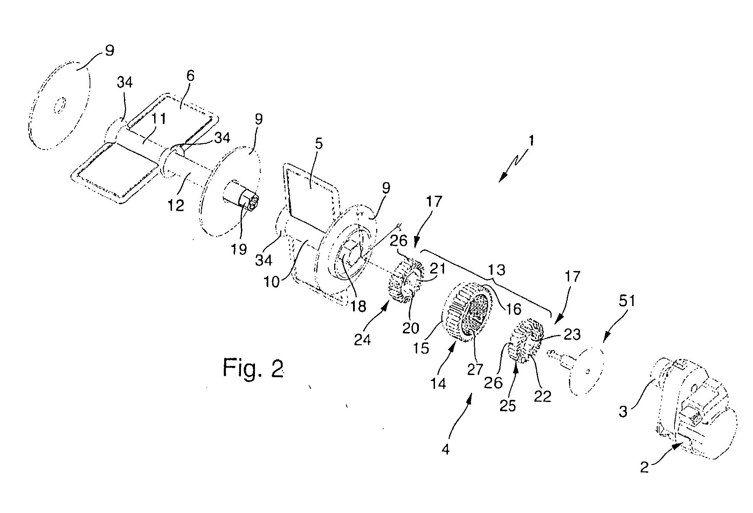

Entsprechend Fig. 2 ist jedes Steuerglied 5,6 jeweils drehfest mit einer eigenen Antriebswelle 10 bzw. 11 verbunden. Dabei ist die Antriebswelle 10 des ersten Steuerglieds 5 als Hohlwelle ausgebildet und die Antriebswelle 11 des zweiten Steuerglieds 6 besitzt einen axialen Fortsatz 12, der die hohle Antriebswelle 10 des ersten Steuerglieds 5 koaxial durchdringt.

Die Kopplungseinrichtung 4 umfaßt hier eine Freigang-Mitnehmer-Anordnung 13, deren Komponenten in Fig. 2 durch eine geschweifte Klammer gekennzeichnet sind. Die Freigang-Mitnehmer-Anordnung 13 umfaßt ein gemeinsames Antriebselement 14, das mit dem Drehantrieb 2 bzw. mit dessen Antriebsrad 3 antriebsverbunden ist. Das Antriebselement 14 besteht hier im wesentlichen aus einer zylindrischen Hülse 15, die radial außen eine Außenverzahnung 16 trägt, die mit dem Antriebsrad 3 in Eingriff steht. Die Hülse 15 nimmt in ihrem Inneren zwei Abtriebselemente 17 auf, wobei das eine Antriebselement 17 drehfest mit der Antriebswelle des ersten Steuerglieds 5 verbunden ist, während das andere Abtriebselement 17 mit dem axialen Ende der Antriebswelle 11 des zweiten Steuerglieds 6 drehfest verbunden ist. Zu diesem Zweck tragen die Antriebswellen 10 und 11 an ihren axialen Enden jeweils einen Außenmehrkant 18 bzw. 19. Der Außenmehrkant 18 der Antriebswelle 10 des ersten Steuerglieds 5 ist komplementär zu einem Innenmehrkant 20 einer Nabe 21 des einen Abtriebselements 17 ausgebildet und formschlüssig darin einsetzbar. Dementsprechend weist das andere Abtriebselement 17 eine Nabe 22 auf, die einen Innenmehrkant 23 besitzt, der komplementär zum Außenmehrkant 19 der Antriebswelle 11 des zweiten Steuerglieds 6 ausgebildet und auf diesen formschlüssig aufsetzbar ist.

Die Abtriebsglieder 17 weisen hier jeweils eine Anordnung 24 bzw. 25 aus einer Vielzahl von Lamellen 26 auf. In jeder Lamellenanordnung 24 bzw. 25 erstrecken sich diese Lamellen 26 von der jeweiligen Nabe 21 bzw. 22 radial nach außen. Die Lamellen 26 sind bei jeder Lamellenanordnung 24,25 jeweils in dieselbe Umfangsrichtung geneigt, wobei die Lamellenanordnungen 24,25 bezüglich der Neigung ihrer Lamellen 26 gegensinnig in der Hülse 15 angeordnet sind. Die Lamellen sind flexibel, insbesondere in radialer Richtung federelastisch ausgebildet.

Die Kopplungseinrichtung 4 umfaßt außerdem ein Deckelelement 38, das zum Verschließen der Kopplungseinrichtung 4 in den ebenfalls hohl ausgebildeten Fortsatz 12 einclipsbar ist.

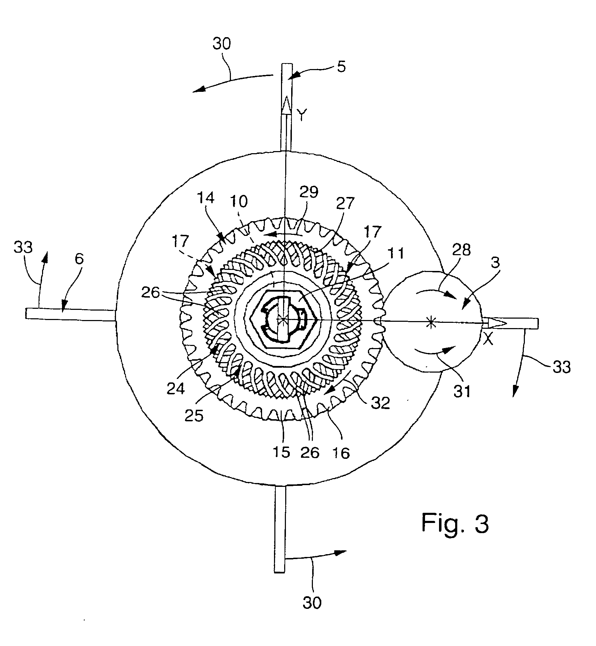

Entsprechend Fig. 3 sind die Lamellenanordnungen 24 bzw. 25 so dimensioniert, daß die Lamellen 26 an einer Innenseite 27 der Hülse 15 anliegen. Diese Innenseite 27 kann wie in Fig. 3 gezeigt, eine aufgerauhte, insbesondere geriffelte oder verzahnte, Oberfläche aufweisen, um die nachfolgend erläuterte Funktion der Freigang-Mitnehmer-Anordnung 13 zu verbessern. Die Innenseite 27 kann durch Anspritzen einer Beschichtung an die Hülse 15 ausgebildet sein, um durch eine geeignete Materialauswahl die Reibung bzw. den Wirkeingriff zwischen den Lamellen 26 und der Innenseite 27 zu verbessern.

Die erfindungsgemäße Vorrichtung 1 arbeitet wie folgt:

Wenn das erste Steuerglied 5 drehend betätigt werden soll, wird der Drehantrieb 2 so angesteuert, daß sein Antriebsrad 3 entsprechend einem Pfeil 28 im Uhrzeigersinn dreht. Folglich dreht sich dann die Hülse 15 des Antriebselements 14 entsprechend einem Pfeil 29 im Gegenuhrzeigersinn. Die Innenseite 27 der Hülse 15 bewegt sich somit relativ zu den Lamellen 26 der dem Betrachter zugewandten, vorderen Lamellenanordnung 25 in der Neigungsrichtung der Lamellen 26. Bei einer derartigen Relativbewegung können die Lamellen 26 nachgeben und entlang der Innenseite 27 abgleiten. Das dem Betrachter zugewandte Abtriebselement 17 ist mit der Antriebswelle 11 des zweiten Steuerglieds 6 drehfest verbunden. Wenn sich das Antriebsglied 14 in Gegenuhrzeigersinn dreht, kann es somit keine hinreichenden Antriebsmomente auf das dem zweiten Steuerglied 6 zugeordnete Abtriebselement 17 übertragen, d.h., der Gegenuhrzeigersinn bildet bei diesem Abtriebselement 17 die Freigangrichtung.

Da die beiden Abtriebselemente 17 bezüglich der Neigungsrichtung ihrer Lamellenanordnungen 24 und 25 gegensinnig angeordnet sind, erfolgt die Drehverstellung der Hülse 15 im Gegenuhrzeigersinn relativ zu dem vom Betrachter abgewandten, hinteren, dem ersten Steuerglied 5 zugeordneten Abtriebselement 17 entgegen der Neigungsrichtung der Lamellen 26. Dementsprechend stützen sich diese Lamellen 26 an der Innenseite 27 der Hülse 15 ab und stemmen sich der Relativbewegung entgegen. Insoweit erfolgt hier eine Momentenübertragung, so daß das vom Betrachter abgewandte Abtriebselement 17 im Gegenuhrzeigersinn angetrieben bzw. mitgenommen wird. Folglich liegt für dieses Abtriebselement 17 die Mitnahmedrehrichtung vor. Da das vom Betrachter abgewandte Abtriebselement 17 mit der Antriebswelle 10 des ersten Steuerglieds 5 drehfest verbunden ist, ergibt sich dadurch eine Drehverstellung des ersten Steuerglieds 5 entgegen dem Uhrzeigersinn entsprechend einem Pfeil 30. Die Lagerung der Steuerglieder 5 erfolgt dabei so, daß die Steuerglieder 5 "durchdrehend" angeordnet sind, d.h. in Drehrichtung ist kein Anschlag vorgesehen, so daß die Stellglieder 5,6 beliebig oft vollständig rotierbar sind.

Um das zweite Steuerglied 6 zu verstellen, wird der Drehantrieb 2 dementsprechend so betätigt, daß sich sein Antriebsrad 3 im Gegenuhrzeigersinn entsprechend einem Pfeil 31 verstellt. Folglich dreht sich dann das Antriebselement 14 im Uhrzeigersinn entsprechend einem Pfeil 32. Diese Drehrichtung entspricht somit der Mitnahmedrehrichtung der dem Betrachter zugewandten, mit dem zweiten Steuerglied 6 gekoppelten Lamellenanordnung 25 und der Freigangdrehrichtung der vom Betrachter abgewandten, mit dem ersten Steuerglied 5 gekoppelten Lamellenanordnung 24. Dementsprechend verstellt sich dann das zweite Steuerglied 6 im Uhrzeigersinn entsprechend einem Pfeil 33.

Damit sich die Steuerglieder 5 und 6 durch eine Strömungsbeaufschlagung nicht von selbst verstellen, sind sie relativ schwergängig gelagert. Insbesondere weisen die Steuerglieder 5 und 6 tulpenförmige Kragen 34 auf, die an den Wandabschnitten 9 anliegen und dort die Reibung erhöhen.

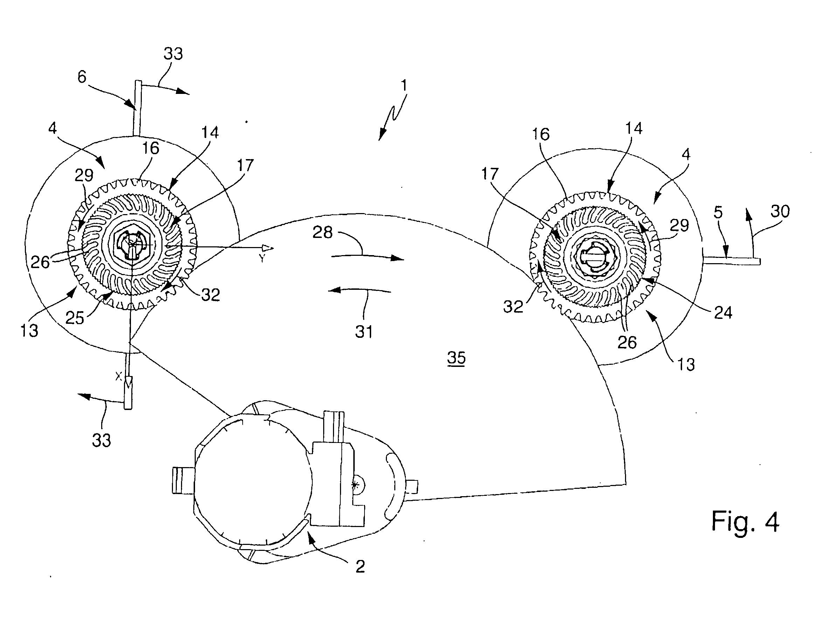

Bei der Ausführungsform gemäß Fig. 4 weist die Kopplungseinrichtung 4 für jedes Steuerglied 5,6 eine separate Freigang-Mitnehmer-Anordnung 13 auf, die jeweils ein Antriebselement 14 mit Hülse 15 besitzen. Die Antriebselemente 14 sind beide mit dem Drehantrieb 2 verbunden. Bei dieser Ausführungsform ist das Antriebsrad 3 durch ein Antriebsscheibensegment 35 ersetzt, das gleichzeitig mit den Außengewinden 16 beider Antriebselemente 14 in Eingriff steht.

Die Funktionsweise ist grundsätzlich dieselbe:

Dreht sich das Antriebsscheibensegment 35 entsprechend dem Pfeil 28 im Uhrzeigersinn, drehen sich die beiden Antriebselemente 14 entsprechend den Pfeilen 29 im Gegenuhrzeigersinn. Diese Drehung ergibt bei dem in Fig. 4 links dargestellten Abtriebselement 17 eine Relativbewegung zwischen Antriebselement 14 und Abtriebselement 17 in der Neigungsrichtung der Lamellen 26 und somit in der Freigangdrehrichtung dieses Abtriebselements 17. Das damit gekoppelte zweite Steuerglied 6 bleibt demnach stehen. Im Unterschied dazu ist das in Fig. 4 rechts dargestellte Abtriebselement 17 hinsichtlich seiner Lamellenanordnung 24 gegensinnig zur Lamellenanordnung 25 des anderen Abtriebselements 17 angeordnet. Dementsprechend ist die Drehverstellung des Antriebselements 14 relativ zu diesem Abtriebselement 17 entgegen der Neigungsrichtung der Lamellen 26, also in der Mitnahmerichtung dieses Abtriebselements 17, orientiert. Folglich nimmt das Antriebselement 14 das Abtriebselement 17 mit, wodurch sich das damit gekoppelte erste Steuerglied 5 entsprechend dem Pfeil 30 verstellt.

Dreht sich das Antriebsscheibensegment 35 entsprechend dem Pfeil 31 im Gegenuhrzeigersinn, drehen sich folglich die Antriebselemente 14 gemäß den Pfeilen 32 im Uhrzeigersinn, was bei dem links dargestellten Abtriebselement 17 des zweiten Schaltglieds 6 der Mitnahmerichtung entspricht und bei dem rechts dargestellten Abtriebselement des ersten Steuerglieds 5 der die Freigangdrehrichtung bildet. Folglich dreht sich dann das zweite Steuerglied 6 im Uhrzeigersinn gemäß dem Pfeil 33, während das erste Steuerglied 5 stehen bleibt.

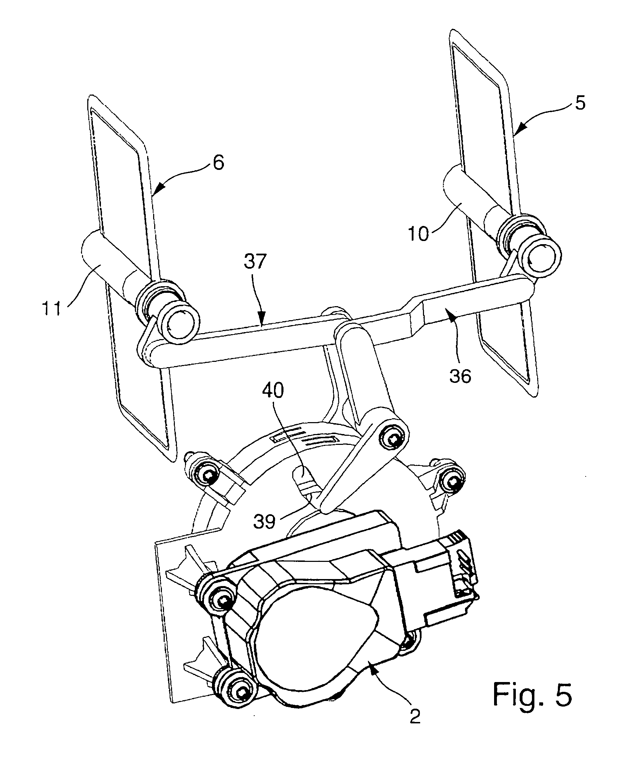

Entsprechend Fig. 5 können die Antriebswellen 10 bzw. 11 der Steuerglieder 5 und 6 jeweils mit einer Hebelanordnung 36 bzw. 37 antriebsverbunden sein. Diese Hebelanordnungen 36 und 37 stehen jeweils mit einer Steuerkurve 39 einer Kurvenscheibe 40 in Eingriff. Der Drehantrieb 2 treibt diese Kurvenscheiben 40 an.

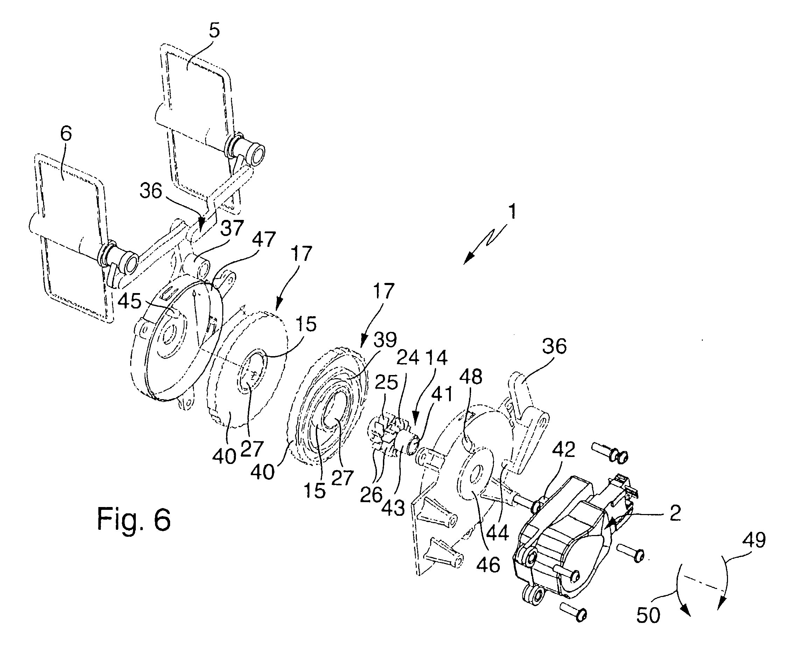

Entsprechend Fig. 6 ist für beide Steuerglieder 5 und 6 wieder ein gemeinsames Antriebsglied 14 vorgesehen, das vom Drehantrieb 2 angetrieben wird. Beispielsweise besitzt das Antriebselement 14 einen Innenmehrkant 41, in den eine Antriebswelle 42 des Drehantriebs 2 formschlüssig eingreift. Das Antriebselement 14 trägt auf einer Nabe 43 zwei Lamellenanordnungen 24 und 25, deren Lamellen 26 gegensinnig zueinander geneigt sind. Die Abtriebselemente 17 weisen die Kurvenscheiben 40 auf, die jeweils eine geeignete Steuerkurve 39 enthalten. Des weiteren besitzen die Abtriebselemente 17 im Zentrum der jeweiligen Kurvenscheibe 40 jeweils eine Hülse 15. Die dem ersten Steuerglied 5 zugeordnete erste Hebelanordnung 36 greift mit einem Führungszapfen 44 in die Steuerkurve 39 der in Fig. 6 rechts dargestellten Kurvenscheibe 40 ein, während die mit dem zweiten Steuerglied 6 gekoppelte zweite Hebelanordnung 37 mit einem Führungszapfen 45 in die hier nicht erkennbare Steuerkurve 39 der in Fig. 6 links dargestellten Kurvenscheibe 40 eingreift. Hierbei durchdringen die Führungszapfen 44 und 45 jeweils eine Gehäusehälfte 46 bzw. 47 im Bereich einer entsprechenden Führungsöffnung 48. Im zusammengebauten Zustand sind die Abtriebselemente 17, also die Kurvenscheiben 40 mit den zentralen Hülsen 15 im zusammengebauten Gehäuse 46,47 untergebracht, wobei das Antriebselement 14 mit seinen Lamellenanordnung 24,25 koaxial im Inneren der Hülsen 15 angeordnet ist. Dabei kommen die Lamellen 26 der rechts dargestellten Lamellenanordnung 24 an der Innenseite 27 der Hülse 15 des rechts dargestellten Abtriebselements 17 zur Anlage, während die Lamellen 26 der links dargestellten Lamellenanordnung 25 an der Innenseite 27 der Hülse 15 des links dargestellten Abtriebselements 17 anliegen.

Die Ausführungsform der Fig. 5 und 6 arbeitet wie folgt:

Wenn der Drehantrieb 2 das Antriebselement 14 entsprechend einem Pfeil 49 im Uhrzeigersinn antreibt, entspricht dies bei der rechts gezeigten Lamellenanordnung 24 der Freigangdrehrichtung und beider links dargestellten Lamellenanordnung 25 der Mitnahmedrehrichtung. Dementsprechend wird nur die links dargestellte Kurvenscheibe 40 mitgedreht, wodurch sich nur die damit zusammenwirkende zweite Hebelanordnung 37 bewegt und dementsprechend das zweite Steuerglied 6 antreibt. Im Unterschied dazu bleibt die rechts dargestellte Kurvenscheibe 40 stehen, so daß auch das damit zusammenwirkende erste Steuerglied 5 stillsteht.

Wenn nun der Drehantrieb 2 das Antriebselement 14 entsprechend einem Pfeil 50 im Gegenuhrzeigersinn antreibt, kann die rechts gezeigte Lamellenanordnung 24 in der Mitnahmedrehrichtung das Antriebsmoment auf die rechts dargestellte Kurvenscheibe 40 übertragen. Dementsprechend verstellt sich das damit gekoppelte erste Steuerglied 5. Im Unterschied dazu kann die links gezeigte Lamellenanordnung 25 in der Freigangdrehrichtung kein hinreichendes Drehmoment auf die damit zusammenwirkende Kurvenscheibe 40 übertragen, so daß folglich auch das damit gekoppelte zweite Steuerglied 6 stehen bleibt.

Ein besonderer Vorteil der Ausführungsform gemäß den Fig. 5 und 6 kann darin gesehen werden, daß die Steuerglieder 5 und 6 durch daran angreifende Strömungskräfte nicht verstellt werden können, was sich durch die Kinematik der Hebelanordnungen 36,37 und der Steuerkurven 39 ergibt.

Wie aus den Fig. 1 bis 6 hervorgeht, ist es bei der erfindungsgemäßen Vorrichtung 1 somit möglich, mit nur einem einzigen Drehantrieb 2 zwei Steuerglieder 5 und 6 unabhängig voneinander drehend zu verstellen, indem mit Hilfe der Kopplungseinrichtung 4 in der einen Drehrichtung des Drehantriebs 2 Drehmomente nur an das eine Steuerglied 5 oder 6 übertragen werden, während in der anderen Drehrichtung die Drehmomente ausschließlich an das andere Steuerglied 6 bzw. 5 übertragen werden. Diese Bauweise vereinfacht somit den Aufwand zur Herstellung der Vorrichtung 1.

### Bezugszeichenliste

- 1: Vorrichtung
- 2: Drehantrieb
- 3: Antriebsrad von 2
- 4: Kopplungseinrichtung
- 5: erstes Steuerglied
- 6: zweites Steuerglied
- 7: Schwenkachse von 5
- 8: Schwenkachse von 6
- 9: Wandabschnitt
- 10: Antriebswelle von 5
- 11: Antriebswelle von 6
- 12: Fortsatz von 11
- 13: Freigang-Mitnehmer-Anordnung
- 14: Antriebselement
- 15: Hülse
- 16: Außenverzahnung
- 17: Abtriebselement
- 18: Außenmehrkant von 10
- 19: Außenmehrkant von 11,12
- 20: Innenmehrkant von 21
- 21: Nabe von 17
- 22: Nabe von 17
- 23: Innenmehrkant von 22
- 24: Lamellenanordnung von 21
- 25: Lamellenanordnung von 22
- 26: Lamelle
- 27: Innenseite von 15
- 28: Drehrichtung
- 29: Drehrichtung
- 30: Drehrichtung
- 31: Drehrichtung
- 32: Drehrichtung
- 33: Drehrichtung
- 34: Kragen von 5,6
- 35: Antriebsscheibensegment
- 36: erste Hebelanordnung
- 37: zweite Hebelanordnung
- 38: Deckelelement
- 39: Steuerkurve
- 40: Kurvenscheibe
- 41: Innenmehrkant von 14
- 42: Außenmehrkant/Antriebswelle von 2
- 43: Nabe von 14
- 44: Führungszapfen von 36
- 45: Führungszapfen von 37
- 46: Gehäusehälfte
- 47: Gehäusehälfte
- 48: Führungsöffnung
- 49: Drehrichtung
- 50: Drehrichtung

## Patentansprüche

1. Vorrichtung zum Drehverstellen von mindestens zwei drehbar gelagerten Steuergliedern (5,6), insbesondere zum Schalten und/oder Steuern von Gasströmungen, vorzugsweise in einer Klimatisierungsanlage, mit einer Kopplungseinrichtung (4), die eingangsseitig mit einem Drehantrieb (2) und ausgangsseitig mit den beiden Steuergliedern (5,6) antriebsverbunden ist, **dadurch gekennzeichnet, daß** die Kopplungseinrichtung (4) so ausgebildet ist, daß sie in einer ersten Drehrichtung des Drehantriebs (2) das erste Steuerglied (5) verstellt, während das zweite Steuerglied (6) stehen bleibt, und in einer zweiten Drehrichtung des Drehantriebs (2) das zweite Steuerglied (6) verstellt, während das erste Steuerglied (5) stehen bleibt.

2. Vorrichtung nach Anspruch 1,
**dadurch gekennzeichnet,**
**daß** die Kopplungseinrichtung (4) eine Freigang-Mitnehmer-Anordnung (13) aufweist, die ein gemeinsames, mit dem Drehantrieb (2) antriebsverbundenes Antriebselement (14) und für jedes Steuerglied (5,6) ein mit dem jeweiligen Steuerglied (5,6) antriebsverbundenes Abtriebselement (17) aufweist, wobei die Abtriebselemente (17) so mit dem gemeinsamen Antriebselement (14) zusammenwirken, daß sie in ihrer jeweiligen Mitnahmedrehrichtung drehfest mit dem Antriebselement (14) gekoppelt sind und in ihrer jeweiligen Freigangdrehrichtung relativ zum Antriebsrad (14) drehverstellbar sind, wobei die Abtriebselemente (17) bezüglich ihrer Mitnahmedrehrichtung und ihrer Freigangdrehrichtung gegensinnig zueinander angeordnet sind.

3. Vorrichtung nach Anspruch 1,
**dadurch gekennzeichnet,**
**daß** die Kopplungseinrichtung (4) für jedes Steuerglied (5,6) eine Freigang-Mitnehmer-Anordnung (13) aufweist, die jeweils ein mit dem Drehantrieb (2) antriebsverbundenes Antriebselement (14) und ein mit dem jeweiligen Steuerglied (5,6) antriebsverbundenes Abtriebselement (17) aufweist, wobei Antriebselement (14) und Abtriebselement (17) jeweils so zusammenwirken, daß sie in einer Mitnahmedrehrichtung drehfest miteinander gekoppelt sind und in einer Freigangdrehrichtung relativ zueinander drehverstellbar sind, wobei die Freigang-Mitnehmer-Anordnungen (13) bezüglich ihrer Mitnahmedrehrichtungen und Freigangdrehrichtungen gegensinnig zueinander angeordnet sind.

4. Vorrichtung nach einem der Ansprüche 1 bis 3,
**dadurch gekennzeichnet,**
**daß** die Abtriebselemente (17) jeweils mit einer Antriebswelle (10,11) drehfest verbunden sind, die jeweils mit einem der Steuerglieder (5,6) drehfest verbunden sind.

5. Vorrichtung nach Anspruch 4,
**dadurch gekennzeichnet,**
**daß** die Antriebswellen (10,11) der Steuerglieder (5,6) koaxial verlaufen, wobei die eine Antriebswelle (10) als Rohr ausgebildet ist, das von der anderen Antriebswelle (11) konzentrisch durchdrungen ist und mit der anderen Antriebswelle (11) an die Kopplungseinrichtung (4) angeschlossen ist.

6. Vorrichtung nach einem der Ansprüche 1 bis 5,
**dadurch gekennzeichnet,**
**daß** die Steuerglieder (5,6) schwergängig gelagert sind, derart, daß die Steuerglieder (5,6) im normalen Betrieb der Vorrichtung (1) nicht durch eine daran angreifende Gasströmung verstellbar sind.

7. Vorrichtung nach einem der Ansprüche 1 bis 6,
**dadurch gekennzeichnet,**
**daß** die beiden Abtriebselemente (17) jeweils eine Kurvenscheibe (40) aufweisen, die jeweils mit einer Hebelanordnung (36,37) in Eingriff stehen, wobei jede Hebelanordnung (36,37) mit einem der Steuerglieder (5,6) antriebsverbunden ist.

8. Vorrichtung nach einem der Ansprüche 1 bis 7,
**dadurch gekennzeichnet,**
- **daß** das Antriebselement (14) eine kreiszylindrische Hülse (15) aufweist, in der das zugehörige Abtriebselement (17) konzentrisch angeordnet ist, wobei das Abtriebselement (17) für das zugeordnete Steuerglied (5,6) eine Anordnung (24,25) aus mehreren, von einer Nabe (21,22) radial nach außen abstehenden und in jeweils dieselbe Umfangsrichtung geneigten, flexiblen Lamellen (26) aufweist, die an der Innenseite (27) der Hülse (15) anliegen, oder
- **daß** das Abtriebselement (17) eine kreiszylindrische Hülse (15) aufweist, in der das zugehörige Antriebselement (14) konzentrisch angeordnet ist, wobei das Antriebselement (14) für das zugeordnete Steuerglied (5,6) eine Anordnung (24,25) aus mehreren von einer Nabe (43) radial nach außen abstehenden und in jeweils dieselbe Umfangsrichtung geneigten, flexiblen Lamellen (46) aufweist, die an der Innenseite (27) der Hülse (15) anliegen.

9. Vorrichtung zumindest nach den Ansprüchen 2 und 8,
**dadurch gekennzeichnet,**
- **daß** das gemeinsame Antriebselement (14) die Hülse (15) enthält, während die beiden Abtriebselemente (17) jeweils eine Lamellenanordnung (24,25) aufweisen, oder
- **daß** das gemeinsame Antriebselement (14) zwei Lamellenanordnung (24,25) aufweist, wobei die Lamellen (26) der einen Anordnung (24) gegensinnig zu den Lamellen (26) der anderen Lamellenanordnung (25) geneigt sind, während die beiden Abtriebselemente (17) jeweils eine Hülse 15 aufweisen.

## Claims

1. A rotary adjustment device for at least two control members (5, 6) which are mounted such that they are able to rotate, in particular for switching and/or controlling gas flows, preferably in an air conditioning system, having a coupling device (4) which is connected in a driving relationship to a rotary drive (2) on the inlet side and to the two control members (5, 6) on the output side,
**characterised in that**
the coupling device (4) is designed in such a manner that when the rotary drive (2) is operating in a first direction of rotation it adjusts the first control member (5) while the second control member (6) remains stationary, and when the rotary drive (2) is operating in a second direction of rotation it adjusts the second control member (6) while the first control member (5) remains stationary.

2. A device in accordance with claim 1,
**characterised in that**
the coupling device (4) has a free/driven movement arrangement (13) having a common driving element (14) connected in a driving relationship to the rotary drive (2) and a driven element (17) connected in a driving relationship to each control member (5, 6), the driven elements (17) co-operating with the common driving element (14) in such a manner that they are coupled to the driving element (14) such that they are unable to rotate in their driven direction of rotation and that rotary adjustment in relation to the drive wheel (14) can be effected in their free direction of rotation, the driven elements (17) being positioned such that their driven and free directions of rotation run counter to one another.

3. A device in accordance with claim 1
**characterised in that**
the coupling device (4) for each control member (5, 6) has a free/driven movement arrangement (13) having a driving element (14) connected in a driving relationship to the rotary drive (2) and a driven element (17) connected in a driving relationship to each control member (5, 6), the driving element (14) and the driven elements (17) co-operating in such a manner that they are coupled together such that they are unable to rotate in a driven direction of rotation and that rotary adjustment in relation to one another can be effected in a free direction of rotation, the free/driven movement arrangement (13) being positioned such that their driven and free directions of rotation run counter to one another.

4. A device in accordance with one of claims 1 to 3,
**characterised in that**
the driven elements (17) are each connected in such a manner that they are unable to rotate to a drive shaft (10, 11) which is in turn connected to one of the control members (5, 6) in such a manner that it is unable to rotate.

5. A device in accordance with claim 4,
**characterised in that**
the drive shafts (10, 11) of the control members (5, 6) run coaxially, one drive shaft (10) being designed as a tube through which the other drive shaft (11) passes concentrically and being connected with the other drive shaft (11) to the coupling device (4).

6. A device in accordance with one of claims 1 to 5,
**characterised in that**
the control members (5, 6) are tightly mounted in such a manner that when the device is operating normally the control members (5,6) are not adjusted by a gas flow acting upon them.

7. A device in accordance with one of claims 1 to 6,
**characterised in that**
the two driven elements (17) each have a curved disk (40) which is engaged with a lever arrangement (36, 37), each lever arrangement (36, 37) being connected in a driving relationship to one of the control members (5, 6).

8. A device in accordance with one of claims 1 to 7,
**characterised in that**
- the driving element (14) has a circular cylindrical sleeve (15) in which the corresponding driven element (17) is positioned concentrically, the driven element (17) for the assigned control member (5, 6) having an arrangement (24, 25) consisting of several flexible strips (26) which project radially outwards from a hub (21, 22), are inclined in the same peripheral direction and touch the inside (27) of the sleeve (15), or
- the driven element (17) has a circular cylindrical sleeve (15) in which the corresponding driving element (14) is positioned concentrically, the driving element (14) for the assigned control member (5, 6) having an arrangement (24, 25) consisting of several flexible strips (46) which project radially outwards from a hub (43), are inclined in the same peripheral direction and touch the inside (27) of the sleeve (15).

9. A device in accordance with one of claims 2 and 8,
**characterised in that**
- the common driving element (14) contains the sleeve (15), while the two driven elements (17) each have a strip arrangement (24, 25), or
- the common driving element (14) has two strip arrangements (24, 25), the strips (26) in one arrangement (24) being inclined in the opposite direction to the strips (26) in the other strip arrangement (25), while the two driven elements (17) each have a sleeve (15).

## Revendications

1. Dispositif de déplacement en rotation d'au moins deux organes de commande (5, 6) montés en rotation, en particulier pour la commande et/ou la régulation de flux de gaz, de préférence dans un système de climatisation, comprenant un mécanisme de couplage (4) qui est relié par entraînement, côté entrée, à une commande de rotation (2) et, côté sortie, aux deux organes de commande (5, 6), **caractérisé en ce que** le mécanisme de couplage (4) est conçu de manière telle, que dans un premier sens de rotation de la commande de rotation (2), il déplace le premier organe de commande (5), tandis que le second organe de commande (6) reste immobile et, dans un second sens de rotation de la commande de rotation (2), déplace le second organe de commande (6), tandis que le premier organe de commande (5) reste immobile.

2. Dispositif selon la revendication 1, **caractérisé en ce que** le mécanisme de couplage (4) présente un dispositif (13) à élément d'entraînement à course libre, mécanisme de couplage qui présente un élément menant commun (14) relié par entraînement à la commande de rotation (2) et présente, pour chaque organe de commande (5, 6), un élément mené (17) relié par entraînement à l'organe de commande respectif (5, 6), où les éléments menés (17) agissent en coopération avec l'élément menant commun (14) de manière telle, que les éléments menés, dans leur sens de rotation d'entraînement respectif, soient couplés, solidaires en rotation, à l'élément menant (14) et, dans leur sens de rotation à course libre respectif, soient mobiles en rotation par rapport à la roue menante (14), où les éléments menés (17) sont disposés en sens inverse, l'un par rapport à l'autre, concernant leur sens de rotation d'entraînement et leur sens de rotation à course libre.

3. Dispositif selon la revendication 1, **caractérisé en ce que** le mécanisme de couplage (4) présente, pour chaque organe de commande (5, 6), un dispositif (13) à élément d'entraînement à course libre, mécanisme de couplage qui présente, respectivement, un élément menant (14) relié par entraînement à la commande de rotation (2) et un élément mené (17) relié par entraînement à l'organe de commande respectif (5, 6), où l'élément menant (14) et l'élément mené (17) fonctionnent ensemble, respectivement, de manière telle que dans un sens de rotation d'entraînement, ils soient couplés l'un à l'autre, solidaires en rotation et, dans un sens de rotation à course libre, soient mobiles en rotation l'un par rapport à l'autre, où les dispositifs (13) à élément d'entraînement à course libre sont disposés en sens inverse, l'un par rapport à l'autre, concernant leurs sens de rotation d'entraînement et leurs sens de rotation à course libre.

4. Dispositif selon l'une quelconque des revendications 1 à 3, **caractérisé en ce que** les éléments menés (17) sont reliés respectivement, solidaires en rotation, à un arbre d'entraînement (10, 11), éléments menés qui sont reliés, respectivement, solidaires en rotation, à l'un des organes de commande (5, 6).

5. Dispositif selon la revendication 4, **caractérisé en ce que** les arbres d'entraînement (10, 11) des organes de commande (5, 6) s'étendent de manière coaxiale, où l'un des arbres d'entraînement (10) est conçu comme un tube qui est traversé, de façon concentrique, par l'autre arbre d'entraînement (11) et est raccordé au mécanisme de couplage (4), par l'autre arbre d'entraînement (11).

6. Dispositif selon l'une quelconque des revendications 1 à 5, **caractérisé en ce que** les organes de commande (5, 6) sont logés en comportant un point dur, de manière telle que les organes de commande (5, 6), au cours du fonctionnement normal du dispositif (1), ne puissent pas être déplacés par un flux de gaz venant sur l'organe de commande.

7. Dispositif selon l'une quelconque des revendications 1 à 6, **caractérisé en ce que** les deux éléments menés (17) présentent respectivement une came (40) qui est respectivement en prise avec un dispositif à levier (36, 37), où chaque dispositif à levier (36, 37) est relié par entraînement à l'un des organes de commande (5, 6).

8. Dispositif selon l'une quelconque des revendications 1 à 7, **caractérisé**
- **en ce que** l'élément menant (14) présente un manchon cylindrique circulaire (15) dans lequel est disposé, de façon concentrique, l'élément mené associé (17) où l'élément mené (17), prévu pour l'organe de commande associé (5, 6), présente un dispositif (24, 25) se composant de plusieurs lamelles flexibles (26) dépassant d'un moyeu (21, 22), vers l'extérieur dans le sens radial, et inclinées à chaque fois dans la même direction circonférentielle, lesquelles lamelles sont en appui sur le côté intérieur (27) du manchon (15), ou bien
- **en ce que** l'élément mené (17) présente un manchon cylindrique circulaire (15) dans lequel est disposé, de façon concentrique, l'élément menant associé (14) où l'élément menant (14), prévu pour l'organe de commande associé (5, 6), présente un dispositif (24, 25) se composant de plusieurs lamelles flexibles (46) dépassant d'un moyeu (43), vers l'extérieur dans le sens radial, et inclinées à chaque fois dans la même direction circonférentielle, lesquelles lamelles sont en appui sur le côté intérieur (27) du manchon (15).

9. Dispositif selon au moins les revendications 2 et 8, **caractérisé**
- **en ce que** l'élément menant commun (14) comprend le manchon (15), tandis que les deux éléments menés (17) présentent respectivement un dispositif à lamelles (24, 25), ou bien
- **en ce que** l'élément menant commun (14) présente deux dispositifs à lamelles (24, 25) où les lamelles (26) de l'un des dispositifs (24) sont inclinées en sens inverse par rapport aux lamelles (26) de l'autre dispositif à lamelles (25), tandis que les deux éléments menés (17) présentent respectivement un manchon (15).
